# DEMANDE DE BREVET EUROPEEN

(11) **EP 2 157 106 A1**
(43) Date de publication de la demande: **24.02.2010**
(21) Numéro de dépôt: 09176680.8
(22) Date de dépôt: 06.07.2005
(51) Int. Cl.: C08F 8/30, C08F 8/32

(54) **Matériau polymère contenant des chaines portant des fonctions imidazolidone**

(30) Priorité: 08.07.2004 FR 0407608
(62) Demande divisionnaire de: 05788743.2
(71) Demandeur: ARKEMA FRANCE, 92700 Colombes (FR); Centre National de la Recherche Scientifique, 75016 Paris (FR)
(72) Inventeur: Tournilhac, François-Genes, 75012, PARIS (FR); Leibler, Ludwik, 75006, PARIS (FR); Cordier, Philippe, 64160, BUROS (FR); Soulie-Ziakovic, Corinne, 75013, PARIS (FR); Linemann, Annett, 57200, SARREGUEMINES (FR); Hidalgo, Manuel, 69530, BRIGNAIS (FR)
(74) Mandataire: Sauvageot, Olivier Roger

(57) **Abrégé**

L'objet de l'invention est un matériau polymère constitué de chaînes macromoléculaires unies par des liaisons hydrogènes dans lequel :
les chaînes macromoléculaires sont constituées d'un squelette polymère sur lequel est fixé par au moins une liaison covalente un agent de modification,
l'agent de modification comporte, réunis dans une même molécule, un ou plusieurs groupes associatifs capables de s'unir par liaisons hydrogène et un ou plusieurs groupes réactifs capables de former des liaisons covalentes avec le squelette polymère,
au moins un des groupes associatifs de l'agent de modification est un hétérocycle de type imidazolidone,
les chaînes macromoléculaires portent en moyenne 1 à 10 groupes imidazolidones par chaîne.

Le nombre moyen de groupes imidazolidone à introduire dans les chaînes macromoléculaires dépend à la fois de la masse moyenne de ces chaînes et des propriétés finales qu'on souhaite conférer au matériau.

Le matériau polymère de l'invention peut être extrudé, co-extrudé, injecté, soufflé, moulé, surmoulé, calandré, thermoformé. On peut en faire des objets tels que par exemple des tubes, des films, des plaques, des joncs, des bouteilles, des conteneurs. Le matériau polymère de l'invention peut aussi être mélangé à d'autres matériaux tels que d'autres polymères, ainsi il est par exemple utilisé comme modifiant choc ou régulateur de rhéologie.

La présente invention concerne aussi l'utilisation du matériau polymère précédent comme agent de compatibilisation dans une composition comprenant entre autres au moins deux polymères appartenant à des classes polymères différentes.

## Description

### [Domaine de l'invention]

La présente invention se rapporte au domaine des matériaux polymères particulièrement au domaine des matériaux polymères constitués de chaînes macromoléculaires unies par des interactions de type liaisons hydrogène. Elle concerne aussi les procédés de synthèses de ces matériaux ainsi que leurs utilisations comme additifs dans des compositions.

Les matériaux de l'invention peuvent être utilisés tels quels ou par exemple comme additifs renforçateurs aux chocs, agents régulateurs de rhéologie.

### [L'art antérieur et le problème technique]

Un des problèmes techniques que cherche à résoudre l'invention est le compromis entre le niveau de viscosité que présentent les polymères à l'état fondu et leurs propriétés mécaniques. En effet, dans la technologie des thermoplastiques par exemple, on a besoin d'une faible viscosité lors de la mise en oeuvre, ce qui ne peut être obtenu qu'avec des systèmes de faible masse moléculaire mais dans le même temps, on souhaite pour le matériau final, une grande élongation à la rupture, une bonne résistance au choc, au fluage ainsi qu'une bonne résistance aux solvants ce qui à l'inverse requiert des masses moléculaires élevées.

D'autre part, il est bien connu que la synthèse de polymères de masses moléculaires très élevée est nettement plus difficile que celle de polymères de faibles masses.

Un autre problème technique à résoudre est la préparation de compositions polymères ayant une résistance et une stabilité chimiques améliorées.

Un autre problème que cherche à résoudre l'invention est la préparation de copolymères séquencés à blocs ou en peigne en unissant des homopolymères préparés dans un premier temps.

La demanderesse a trouvé que ces problèmes peuvent être résolus par la modification chimique de polymères en y introduisant un agent de modification comprenant des groupes imidazolidones.

La modification chimique de systèmes polymères selon l'invention passe par la formation d'une liaison covalente entre le squelette polymère et l'agent de modification. L'agent de modification comporte, réunis dans une même molécule, un ou plusieurs groupes associatifs capables de s'unir par liaisons hydrogène et un ou plusieurs groupes réactifs capables de former des liaisons covalentes avec le squelette polymère. Suivant l'invention, au moins un des groupes associatifs de l'agent de modification est un hétérocycle de type imidazolidone. Le cas échéant, le squelette polymère considéré pourra comporter un certain nombre de comonomères judicieusement choisis afin de faciliter l'opération de greffage, c'est à dire la fixation de l'agent de modification sur le squelette polymère par au moins une liaison covalente.

De part la présence des groupes associatifs, les chaînes polymères modifiées sont capables de s'unir par des liaisons hydrogène coopératives, le rôle des groupes associatifs peut être aussi de renforcer ce pouvoir d'association si celui-ci préexiste dans le système non modifié. Un avantage de ce type d'association est que ces liaisons hydrogène sont réversibles : elles peuvent être rompues par une élévation de température ou par l'action d'un solvant sélectif et se reformer par la suite.

Un avantage des modifications chimiques décrites dans ce brevet est l'amélioration des conditions de mise en oeuvre, des propriétés finales, notamment mécaniques, des polymères modifiés. De même l'usage de groupes associatifs confère les propriétés de polymères de grandes masses à des polymères de petites masses moléculaires, plus facile à réaliser de façon contrôlée.

Les modifications chimiques décrites dans ce brevet permettent de greffer le même type de groupe associatif sur différents types de chaînes macromoléculaires.

Les groupes associatifs peuvent être introduits dans les polymères par différentes voies. On peut citer la copolymérisation avec un monomère portant le groupe associatif, l'utilisation au cours de la synthèse du polymère de l'agent de modification comme agent de transfert ou de terminaison. Selon l'invention les groupes associatifs sont introduits sur des systèmes polymères ou copolymères déjà constitués par réaction avec l'agent de modification, autrement dit après l'étape de polymérisation ou de polycondensation. Pour les systèmes polymères résultant de polycondensations tels que, par exemple, les polyesters et les polyamides qui présentent de facto des fins de chaîne réactives, l'agent de modification peut aussi être introduit pendant la synthèse comme agent limiteur de chaîne.

Un des avantages de procéder par modification de polymères ou de copolymères existants est de pouvoir synthétiser toute une gamme de produits à partir d'une polymérisation unique, par exemple, des polymères modifiés contenant un plus ou moins grand nombre de groupes associatifs peuvent être obtenus en faisant varier la quantité d'agent de modification ou le temps de réaction pendant l'étape de greffage alors que pour atteindre le même résultat à l'aide de monomères portant le groupe associatif, il est nécessaire de procéder dans chaque cas à une nouvelle polymérisation.

Enfin, la présence de ces groupes associatifs sur des chaînes macromoléculaires appartenant à des classes polymères différentes permet de réaliser des copolymères à blocs dont les deux blocs sont unis par des liaisons hydrogènes.

### [Brève description de l'invention]

L'objet de l'invention est donc un matériau polymère constitué de chaînes macromoléculaires unies par des liaisons hydrogène dans lequel :
les chaînes macromoléculaires sont constituées d'un squelette polymère sur lequel est fixé par au moins une liaison covalente un agent de modification,
l'agent de modification comporte, réunis dans une même molécule, un ou plusieurs groupes associatifs capables de s'unir par liaisons hydrogène et un ou plusieurs groupes réactifs capables de former des liaisons covalentes avec le squelette polymère,
au moins un des groupes associatifs de l'agent de modification est un hétérocycle de type imidazolidone,
les chaînes macromoléculaires portent en moyenne 1 à 10 groupes imidazolidone par chaîne.

Le cas échéant, le squelette polymère considéré pourra comporter un certain nombre de comonomères judicieusement choisis afin de faciliter l'opération de greffage, c'est à dire la fixation de l'agent de modification sur le squelette polymère par au moins une liaison covalente.

Le nombre moyen de groupes imidazolidone à introduire dans les chaînes macromoléculaires dépend à la fois de la masse moyenne de ces chaînes et des propriétés finales qu'on souhaite conférer au matériau.

On peut utiliser un mélange d'agents de modification. Par exemple différents agents de modification peuvent être fixés sur le même squelette polymère, un agent de modification peut être fixé sur des squelettes polymères et un autre agent de modification sur les autres squelettes polymères, les squelettes polymères peuvent être des mélanges de différents squelettes polymères ou toute combinaison de ces possibilités.

Le matériau polymère de l'invention peut être extrudé, co-extrudé injecté, soufflé, moulé, surmoulé, calandré, thermoformé. On peut en faire des objets tels que par exemple des tubes, des films, des plaques, des joncs, des bouteilles, des conteneurs. Le matériau polymère de l'invention peut aussi être mélangé à d'autres matériaux tels que d'autres polymères, ainsi il est par exemple utilisé comme modifiant choc ou régulateur de rhéologie.

La présente invention concerne aussi l'utilisation du matériau polymère précédent comme agent de compatibilisation dans une composition comprenant entre autres au moins deux polymères appartenant à des classes polymères différentes.

### [Description détaillée de l'invention]

S'agissant des squelettes polymères ils peuvent appartenir à différentes classes polymères. Ils sont choisis de préférence parmi les polyoléfines, les polydiènes, les polyvinyles, les polyacrylates, les polyméthacrylates, les polyesters, les polyamides, les polyethers, les polycarbonates, les polysiloxanes, les polyurethannes ainsi que les copolymères des types précédents. Selon une forme préférée la masse molaire moyenne en nombre des squelettes polymères est comprise entre 1000 et 100000.

S'agissant de l'agent de modification, il comporte, réunis dans une même molécule, un ou plusieurs groupes associatifs A capables de s'unir par liaisons hydrogène et un ou plusieurs groupes réactifs R capables de former des liaisons covalentes avec le polymère. Les groupements A et R sont reliés entre eux par une chaîne rigide ou flexible X:

A-X-R

Suivant l'invention, au moins un des groupes associatifs de l'agent de modification est un hétérocycle de type imidazolidone.

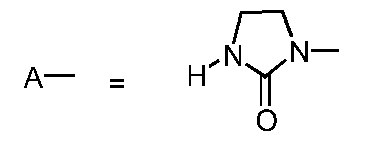

Le ou les groupe(s) réactif (s) présent(s) dans l'agent de modification n'a pas besoin d'être un groupement chimique polymérisable mais seulement un groupement capable de former une liaison covalente avec des groupes réactifs présents sur le squelette polymère. De préférence, R pourra être un halogène, un groupement amine primaire ou secondaire, alcool, thiol, aldéhyde, cétone, acide carboxylique ou dérivé (chlorure ou bromure d'acide, anhydride d'acide ou ester), acide sulfonique ou dérivé, isocyanate, epoxy.

La chaîne rigide ou flexible, X peut être une chaîne hydrocarbonée porteuse d'un ou plusieurs hétéroéléments, il pourra s'agir d'une chaîne alkyle linéaire ou ramifiée composée de un à 30 atomes de carbone, d'un cycle ou d'une succession d'éléments alkyl ou aryl unis par des ponts
-C(O)O-, OC(O), C(O), -O-, -S-, -NH-.; avantageusement ces groupements présents sur la chaîne X et notamment quand il s'agit de ponts amide C(O)NH, sont susceptibles de s'associer par liaisons hydrogène.

Eventuellement, la réaction de R avec le squelette polymère pourra faire apparaître des groupes associatifs par liaison hydrogène supplémentaires et notamment des ponts amide -C(O)NH- ou -NHC(O)-.

Selon une forme préférentielle de l'invention l'agent de modification correspond à l'une des molécules suivantes :

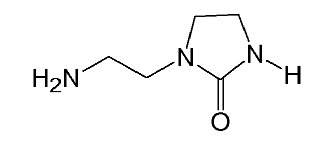

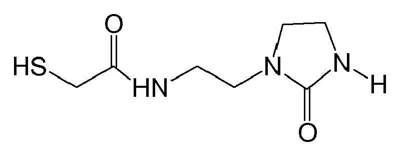

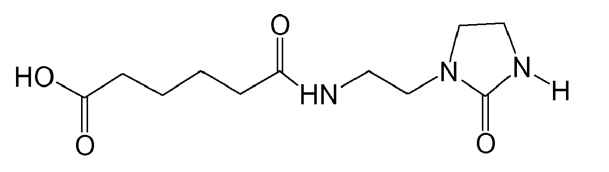

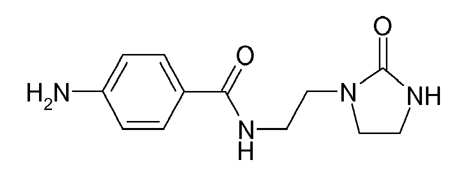

De façon surprenante, la modification chimique de polymères par greffage de groupes associatifs imidazolidone entraîne une variation considérable des propriétés physiques de ces polymères. En particulier la présence des groupes associatifs se traduit par une élévation du module élastique des polymères modifiés et cela dans une large gamme de température. Ainsi, dans le cas du PMMA modifié on constate une amélioration du module élastique jusqu'à une température d'environ 170°C alors que dans les systèmes précédemment décrits, l'amélioration des propriétés mécaniques n'est sensible qu'à basse température (au dessous de 80°C [Yamauchi K. et al. Macromolecules 37 3519 (2004)] ou au dessous de 140°C [Colombani O. Thèse de Doctorat Université Paris VI, (2003)] suivant le système considéré). Cette caractéristique permet d'envisager le renforcement de systèmes tels que le PMMA, ayant déjà une résistance thermomécanique importante, tout en préservant d'autres propriétés telles que transparence, fluidité à haute température, facilité de mise en oeuvre. En outre, les systèmes polymères modifiés par des groupes associatifs de type imidazolidone présentent une résistance aux solvants améliorée.
le mélange de deux squelettes polymères différents porteurs de fonctions imidazolidones permet de former des « copolymères à blocs » . Ces diblocs présentent une micro séparation de phase.

Association linéaire type dibloc :

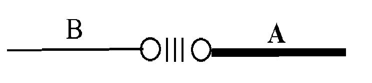

Association linéaire type «multiblocs»: A et B des squelettes polymères différents
O: groupe contenant la fonction imidazolidone. Des squelettes polymères differents A et B portent un agent de modification à chacune de leurs extrémités. On obtient ainsi une association linéaire multiblocs, A/B. 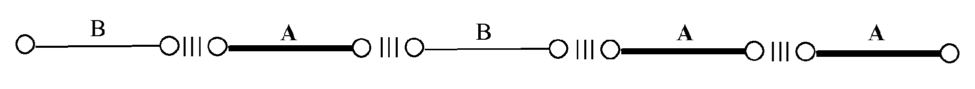 Association «branchée» type «copolymère greffé»: A et B deux squelettes polymères différents.
O: groupe contenant la fonction imidazolidone
A et B des squelettes polymères différents, chaque chaîne de A porte au moins deux agents de modification et B porte un agent de modification à l'une de ses extrémités ou un agent de modification à chacune de ses extrémités.

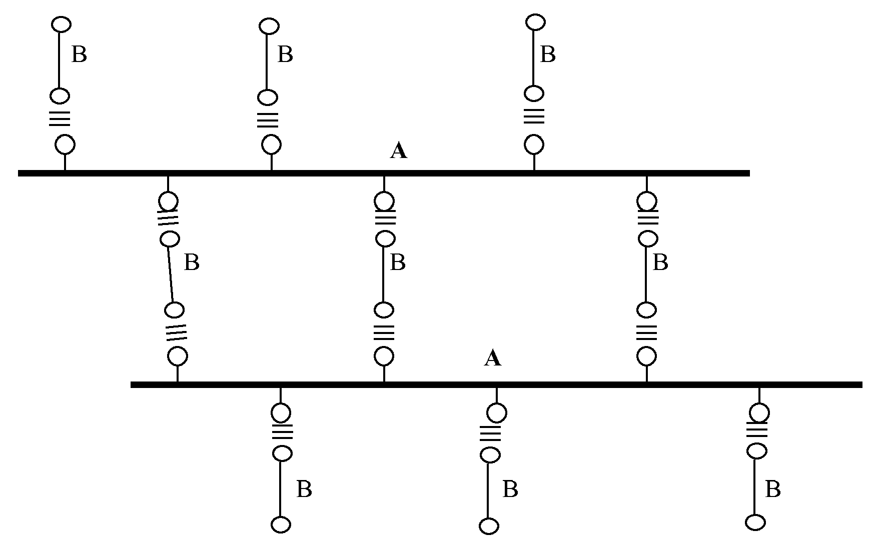

### Exemple 1 : Synthèse de la N-aminoethyle 2-imidazolidone (AEIO).

Dans un tricol de 500mL, muni d'un réfrigérant à eau et d'une agitation magnétique, on introduit 154.5 g (1.5 mol) de diéthylènetriamine (DETA), 154.5 g (8.58 mol) d'eau. Le mélange réactionnel est parcouru par un balayage d'azote.
L'exothermie provoquée par le mélange eau-DETA permet de préchauffer le milieu réactionnel. On ajoute alors 45 g (0.75 mol) d'urée. On augmente la température jusqu'à obtenir le reflux (∼130°C). On mène la réaction pendant 10 heures.

Après réaction, sans changer la température mais en enlevant le reflux, on laisse évaporer l'eau et la DETA au maximum. Sous un vide léger, 10 mmHg, on évapore, par distillation simple, la DETA résiduelle vers ∼75°C.
Le mélange est alors distillé, par distillation fractionnée, sous vide à -0.08-0.09 mmHg. La première fraction n'est pas recueillie. Pour la seconde fraction, la température en tête de colonne est alors 105°C.

On obtient un solide cristallin blanc, AEIO, de point de fusion Mp=41°C et de masse moléculaire 129 g. Le rendement après distillation est η=75% par rapport à l'urée.

### Exemple 2 : Greffage de AEIO sur copolymère à base de MMA

A 220°C, dans une extrudeuse bivis DACA, munie d'une recirculation, on introduit 3g de copolymère HT10 (copolymère acrylique contenant 90% de méthacrylate de méthyle, Mₙ=40000 g/mol, -30 fonctions anhydrides par chaîne) et 290mg (2.25 mmol) de AEIO, synthétisé selon l'exemple 1. Le temps de mélange est de 5 min et donne le copolymère greffé HT10-g-UD.

En FTIR, on note, pour chaque copolymère, 3 bandes relatives aux doubles liaisons C=O (ente 1850 et 1600 cm⁻¹) :

| **HT10** | **Fonction** | **HT10-g-UD** | **Fonction** |
|---|---|---|---|
| 1803 cm⁻¹ | Anhydride | 1730 cm⁻¹ | Ester |
| 1760 cm⁻¹ | Anhydride | 1674 cm⁻¹ | Imidazolidone |
| 1732 cm⁻¹ | Ester | 1650 cm⁻¹ | Amide |

Le greffage est attesté par la disparition complète des bandes anhydrides et l'apparition de bandes caractéristiques du motif imidazolidone.

Pour le copolymère modifié on note une diminution notable de la solubilité dans le chloroforme et une augmentation de la température de transition vitreuse.
Tg(HT10)= 121 °C et Tg(HT10-g-UD)= 129°C

En DMA, la différence entre les Tg des deux copolymères se retrouve sur le point de ramollissement. De plus, à partir de 190°C, le module élastique de HT10-g-UD chute et finit par se confondre avec celui de HT10.

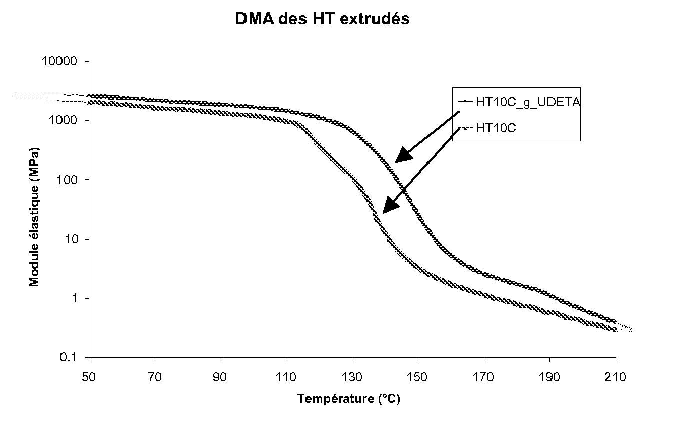

### Exemple 3 : Greffage de AEIO sur copolymère à base MMA

A 220°C, dans une extrudeuse bivis DACA, munie d'une recirculation, on introduit 3g de copolymère HT121 (copolymère acrylique contenant 96% de méthacrylate de méthyle, Mₙ=40000 g/mol, -3 fonctions anhydrides par chaîne) et 29mg (0.225 mmol) de AEIO, synthétisé selon l'exemple 1. Le temps de mélange est de 5 min et donne le copolymère greffé HT121-g-UD.

En FTIR, on note, pour chaque copolymère, 3 bandes relatives aux doubles liaisons C=O (ente 1850 et 1600 cm⁻¹) :

| **HT121** | **Fonction** | **HT121-g-UD** | **Fonction** |
|---|---|---|---|
| 1803 cm⁻¹ | Anhydride | 1730 cm⁻¹ | Ester |
| 1760 cm⁻¹ | Anhydride | 1674 cm⁻¹ | Imidazolidone |
| 1732 cm⁻¹ | Ester | 1650 cm⁻¹ | Amide |

Le greffage est attesté par la disparition complète des bandes anhydrides et l'apparition de bandes caractéristiques du motif imidazolidone.

Pour le copolymère on note une augmentation de la température de transition vitreuse.
Tg(HT121)= 123 °C et Tg(HT121-g-UD)= 129°C

### Example 4 : Greffage de AEIO sur copolymère à base d'éthylène

A 140°C, dans une extrudeuse bivis DACA munie d'une recirculation, on introduit 3g de copolymère LOTADER 3210 (Mₙ=13500 g/mol, -2.8 anhydrides par chaîne), contenant 0.21 mmol de fonctions anhydrides, soit 27 mg (0.21 mmol) de AEIO synthétisé selon l'exemple 1. Le temps de mélange est 10 min et donne le copolymère greffé LOTADER 3210-g-UD.

En FTIR, on note, pour chaque copolymère, 3 bandes relatives aux doubles liaisons C=O (ente 1850 et 1600 cm⁻¹) :

| **LOTADER 3210** | **Fonction** | **LOTADER 3210-g-UD** | **Fonction** |
|---|---|---|---|
| 1854 cm⁻¹ | Anhydride | 1843 cm⁻¹ | Anhydride |
| 1780 cm⁻¹ | Anhydride | 1777 cm⁻¹ | Anhydride |
| 1735 cm⁻¹ | Ester | 1734 cm⁻¹ | Ester |
| 1710 cm⁻¹ | Acide | 1709 cm⁻¹ | Acide |
| | | 1680 cm⁻¹ | Imidazolidone |
| | | 1650 cm⁻¹ | Amide |

L'infrarouge de LOTADER 3210 montre qu'une forte proportion des anhydrides maléiques est hydrolysée et ne participera pas au greffage. Dans le LOTADER 3210-g-UD, on observe une baisse de l'intensité des pics anhydrides au profit du pic acide et des nouveaux pics amide et imidazolidone. Cependant, le greffage n'est pas total.

La température de fusion des copolymères est identique (105°C) tout comme le taux de cristallinité (28%).

En DMA, après la fusion, le module élastique du copolymère LOTADER 3210-g-UD présente un plateau secondaire à environ 0.15 MPa alors que le copolymère LOTADER 3210 ne le possède pas.

### Exemple 5: Greffage de AEIO sur Polyamide

Dans des conditions similaires, on effectue le greffage de AEIO sur un polyamide de faible masse moléculaire Mw = 1500g/mol comportant des terminaisons COOH. Par rapport à un polyamide de la même famille de masse moléculaire Mw = 15000g/mol (platamid), le polyamide modifié, PADU présente une augmentation du module élastique à température ambiante et jusqu'à une température d'environ 65°C et une plus grande fluidité à température élevée.

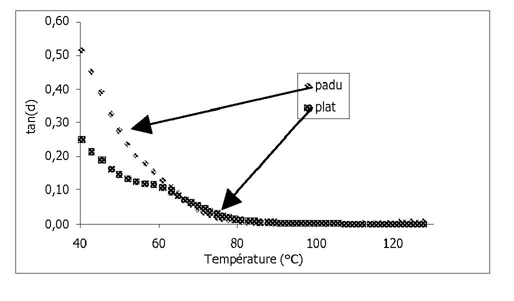

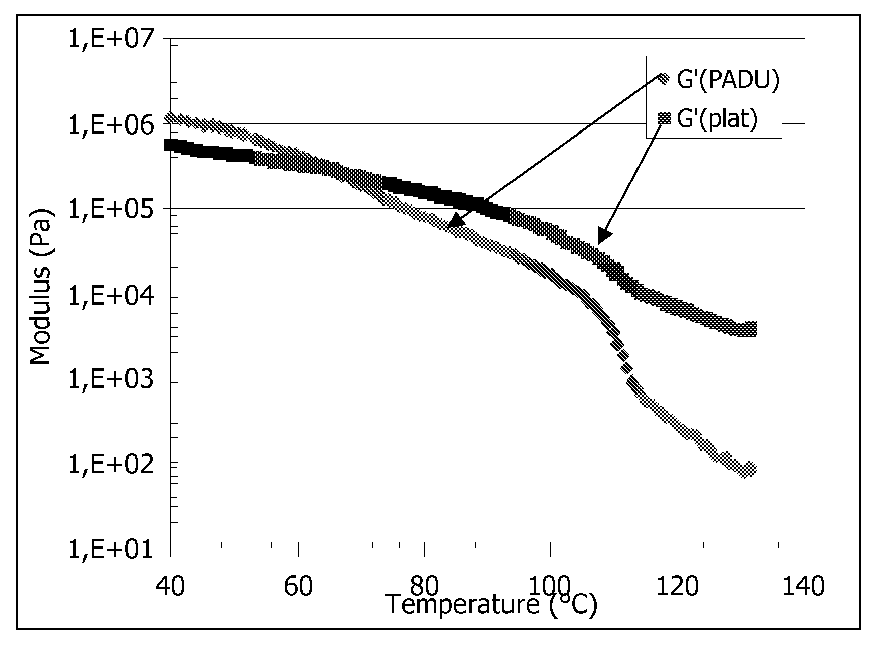

### Exemple 6 Greffage de AEIO sur du PMMA avec 5% de fonctions acides

Un copolymère de méthacrylate de méthyle et d'acide méthacrylique (4,5% en nombre) HT121 (Mn = 40 000 g/mol) est extrudé dans une mini-extrudeuse bi-vis DSM avec recirculation pendant 30 min à 220°C. On constate l'apparition de deux bandes d'absorption en FTIR (en solution dans le chloroforme) caractéristiques des liaisons C=O des anhydrides à 1755 et 1805 cm-¹.

15g de ce produit sont ensuite mélangés dans la même extrudeuse avec 1g de AEIO à 220°C pendant 5 min. L'étude du produit obtenu en FTIR (CHCl₃) montre un greffage partiel, la bande de la liaison C=O de l'amide formée apparaît vers 1670 cm⁻¹, mais les bandes correspondant aux liaisons C=O de l'anhydride ne diminuent que très peu.

Les échantillons de HT121 et HT121greffé sont préparés par pressage sous forme de disques. Ces disques sont placés dans un rhéomètre à plaques parallèles Ares à 175°C, et un test de balayage en fréquences est réalisé (de 10 Hz à 0.32 mHz) avec une déformation imposée de 1%.

| | **HT121** | **HT121greffé** |
|---|---|---|
| **viscosité complexe à 10 Hz (Pa.s)** | 7267 | 7329 |
| **viscosté complexe à 0,00032 Hz (Pa.s)** | 2,5E+06 | 1,7E+07 |
| **fréquence où G'=G" (Hz)** | 0,0257 | < 0,00032 |
| **temps de relaxation (s)** | 6,2 | > 500 |

La viscosité aux fréquences supérieures à 0,2 Hz est la même pour les deux échantillons. En revanche, la viscosité à basses fréquences est augmentée de manière importante par le greffage. Une augmentation très nette du temps de relaxation des chaînes est également observée, pour le HT121 greffé, ce temps est trop long pour être mesurable dans le mode de balayage en fréquence utilisé.

En DMA, au dessus de la température de transition vitreuse, on observe une décroissance plus lente du module élastique pour HT121greffé (E' de l'ordre de 50 MPa à 150°C).

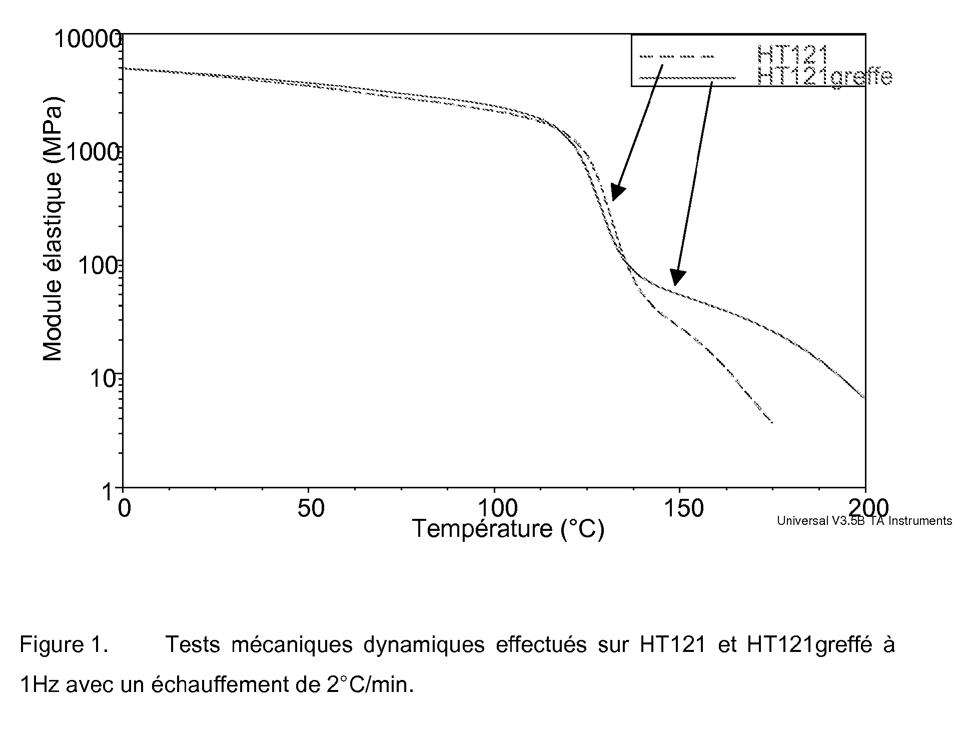

### Exemple 7 : Greffage de AEIO sur du PMMA avec fonctions anhydrides

On choisit un copolymère de méthacrylate de méthyle et d'acide méthacrylique (7,5% en nombre) (Mn = 30000g/mol) contenant 3,3% de fonctions anhydrides. Il est noté 72565. 15g de ce polymère sont mélangés dans une mini-extrudeuse bi-vis DSM munie d'une recirculation, avec 0,64g de AEIO à 220°C pendant 5 minutes.

En spectroscopie FTIR (CHCl₃), on constate la diminution des bandes caractéristiques des anhydrides à 1755 et 1805 cm⁻¹, et l'apparition de la bande vers 1670 cm⁻¹ attribuée à l'amide formée lors du greffage.

On constate une élévation de la température de transition vitreuse Tg due au greffage:
Tg(72565) = 130,8°C Tg(72565greffé) = 133,7°C

Un test de fluage en flexion en DMA est effectué pour 72565 et 72565greffé, pour chaque composé la température de test est inférieure de 10°C à la Tg. Une contrainte de 10 MPa est appliquée pendant 2 heures, puis la recouvrance est observée sur une période de 2 heures. La Figure 2 représente les profils de contrainte imposée et de déformation mesurée en fonction du temps. Le 72565 a une déformation de 9,2% après 2 heures, comparativement à 7,2% pour 72565greffé. Le greffage améliore également la recouvrance de manière significative, après 2 heures de recouvrance 72565greffé a une déformation résiduelle de 3,8% (soit presque la moitié de la déformation provoquée par le fluage), comparativement à 6,0% pour 72565, qui n'a donc récupéré qu'un tiers de la déformation apportée par le fluage.

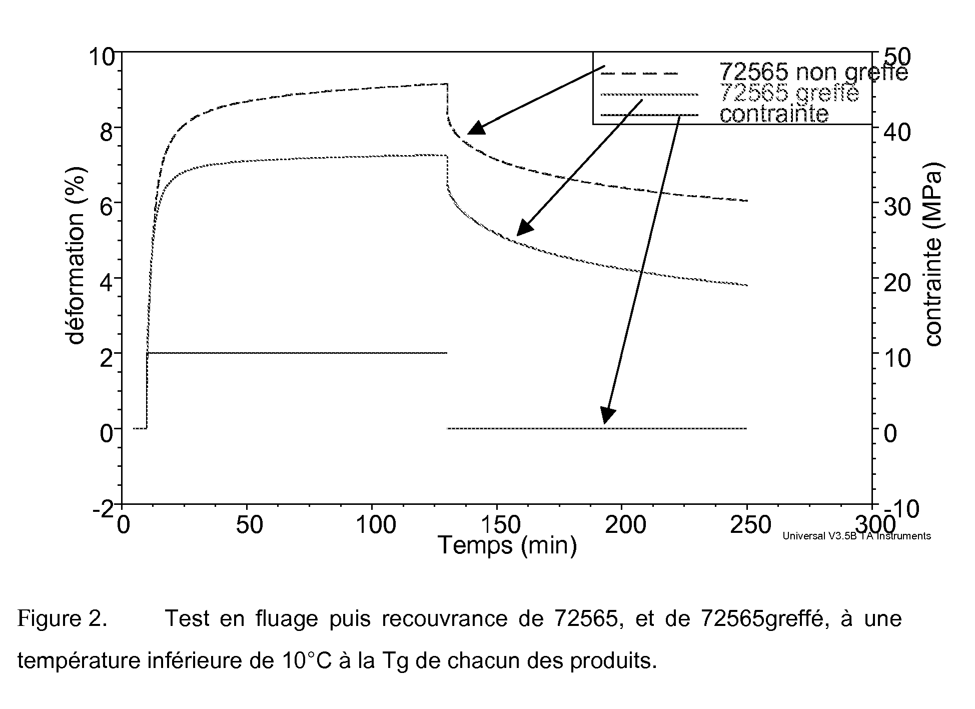

Des balayages en fréquences sont réalisés à 175°C dans un rhéomètre avec une géométrie de plaques parallèles. La viscosité à hautes fréquences est peu modifiée, mais à basses fréquences, elle augmente de manière assez conséquente.

| | **72565** | **72565greffé** |
|---|---|---|
| **viscosité complexe à 10 Hz (Pa.s)** | 1,0E+04 | 1,6E+04 |
| **viscosté complexe à 0,00046 Hz (Pa.s)** | 2,4E+06 | 8,4E+06 |
| **fréquence où G'=G" (Hz)** | 0,03 | 0,0033 |
| **temps de relaxation (s)** | 5,3 | 48,2 |

### Exemple 8 : Greffage en solution de AEIO sur du PMMA avec fonctions anhydrides

40g de PMMA 72565, 3,5g de AEIO (en excès) et 600 ml de chloroforme anhydre sont introduits dans un ballon d'un litre équipé d'un système de chauffage à reflux.

En FTIR (CHCl₃) on constate la disparition des bandes à 1755 et 1805 cm⁻¹ attribuées aux anhydrides et l'apparition d'une bande amide à 1670 cm⁻¹.

L'étude en DSC montre également une importante élévation de la Tg :
Tg (72565) = 130,8°C Tg (72565greffé_solution) = 138,3°C

### Exemple 8 bis : Greffage en extrusion de AEIO sur un PMMA de Mn=10000g/mol avec fonctions anhydrides.

Dans une extrudeuse double-vis DSM, 10g de PMMA-3 (de masse moyenne en nombre égale à 10000g/mol comportant 8% en moles de fonctions anhydrides) sont extrudés à 220°C, en l'absence ou en présence d'un équivalent de AEIO. Le polymère extrudé est injecté sous forme de barreaux de section 1.5×4 mm. L'analyse thermomécanique révèle des différences entre les échantillons de polymère modifié (graft, graft2) et les échantillons non modifiés (neat, neat2, neat3). Ainsi, la température de transition vitreuse, Tg est respectivement de 120°C et 136°C dans les échantillons de polymère non modifié et modifié; En flexion trois points (avec une distance de 10.2 mm entre points), on constate, à 30°C dans les échantillons modifiés une élévation de +15% du module et de +80% de la déformation à la rupture. 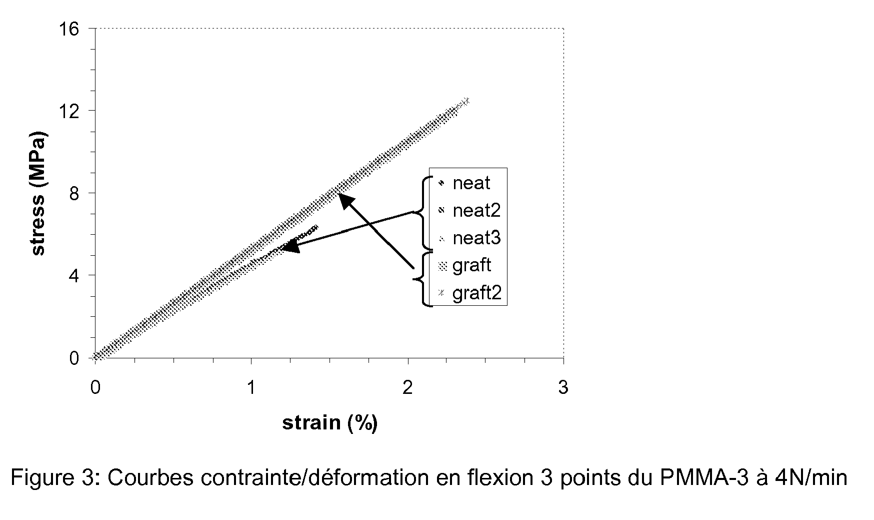 D'autre part, on observe une amélioration de la résistance au fluage: Pour cette expérience, des barreaux de longueur 18mm et de section 1.5×4 mm sont soumis à une contrainte de 1 Mpa dans la géométrie single cantilever, la température est fixée à 10°C au dessus de Tg. Ainsi, à 126°C dans l'échantillon modifié, la vitesse de déformation au bout de deux heures est de 0,16% par heure alors que, dans les mêmes conditions et à une température de 110°C, elle est de 0,35% par heure dans l'échantillon de polymère non modifié. Après retrait de la sollicitation et en maintenant la température pendant encore 3 heures, la déformation diminue jusqu'à 29% de sa valeur initiale dans l'échantillon de polymère modifié alors qu'elle demeure à 60% de sa valeur initiale dans l'échantillon de polymère non modifié.

### Exemple 9: Greffage de AEIO sur un polyamide

3g d'un polyamide PA (Platamid) de petite masse (Mn = 3000 g/mol), terminé par des groupements acides, sont introduits dans une mini-extrudeuse bi-vis DACA avec recirculation, avec 0,256 g de AEIO et d'une goutte d'acide orthophosphorique. Le mélange est agité à 230°C pendant 2 minutes, 20 minutes et 1 heure.

Une analyse en FTIR montre que la bande correspondant aux doubles liaisons C=O d'acide carboxylique vers 1710 cm⁻¹ diminue avec le temps.

| **durée de greffage** | **hauteur de la bande à 1710 cm-1** |
|---|---|
| 0' | 0,06 |
| 2' | 0,032 |
| 20' | 0,026 |
| 60' | 0,023 |

Des analyses en rhéomètre à plaques parallèles ARES à 150°C, sous une déformation imposée de 1 %, montrent une augmentation du module visqueux sur toute la gamme de fréquence (de 10 Hz à 0.32 mHz) en fonction de la durée de greffage (les modules élastiques sont trop faibles pour être mesurés avec précision).

| | **PA** | **PA + UDETA** | **PA + UDETA** | **PA + UDETA** |
|---|---|---|---|---|
| **durée de greffage** | 0' | 2' | 20' | 60' |
| **G" à 15 Hz (Pa)** | 1104 | 641 | 1140 | 1676 |

Pour des temps réactionnels supérieurs à 20 minutes, on observe une augmentation du module visqueux dans les mélanges PA+AEIO par rapport au PA non greffé pur.

## Revendications

1. Matériau polymère constitué de chaînes macromoléculaires unies par des liaisons hydrogènes dans lequel :
les chaînes macromoléculaires sont constituées d'un squelette polymère qui est du PMMA sur lequel est fixé par au moins une liaison covalente un agent de modification, l'agent de modification comporte, réunis dans une même molécule, un ou plusieurs groupes associatifs capables de s'unir par liaisons hydrogène et un ou plusieurs groupes réactifs capables de former des liaisons covalentes avec le squelette polymère, au moins un des groupes associatifs de l'agent de modification est un hétérocycle de type imidazolidone, les chaînes macromoléculaires portent en moyenne 1 à 10 groupes imidazolidones par chaîne.

2. Matériau selon la revendication 1 dans lequel les agents de modification sont de formule générale suivante : 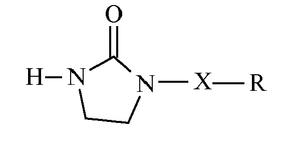 Dans laquelle :
R désigne un halogène, un groupement amine primaire, ou secondaire, alcool, thiol, aldéhyde, cétone, acide carboxylique ou dérivé (chlorure ou bromure d'acide, anhydride d'acide ou ester), acide sulfonique ou dérivé, isocyanate, epoxy,
X désigne une chaîne hydrocarbonée porteuse d'un ou plusieurs hétéroéléments, telle que une chaîne alkyle linéaire ou ramifiée composée de un à 30 atomes de carbone, d'un cycle ou d'une succession d'éléments alkyl ou aryl unis par des ponts -C(O)O-, OC(O), -C(O)NH-, -NHC(O)-, C(O), -O-, -S-, -NH-.

3. Matériau suivant l'une des revendications 1 ou 2 dans lequel la fixation de l'agent de modification fait apparaître un groupe de liaison de type amide -NHC(O)- ou -C(O)NH-.

4. Matériau polymère selon la revendication 2 dans lequel l'agent de modification est :

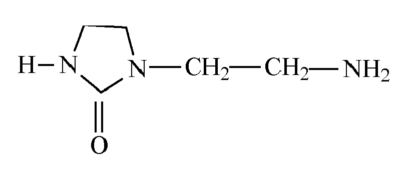

5. Matériau polymère selon la revendication 2 dans lequel l'agent de modification est :

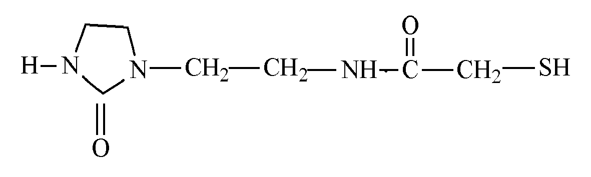

6. Matériau polymère selon la revendication 2 dans lequel l'agent de modification est :

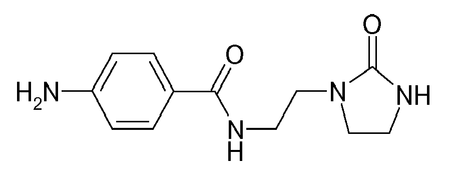

7. Matériau polymère selon la revendication 2 dans lequel l'agent de modification est :

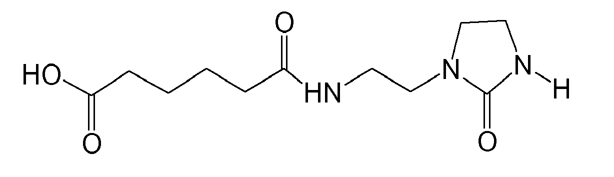

8. Matériau polymère selon l'une quelconque des revendications précédentes dans lequel les squelettes polymères présentent une masse moyenne en nombre comprise entre 1000 et 100000.

9. Matériau selon l'une quelconque des revendications précédentes dans lequel il y a deux squelettes polymères différents.

10. Matériau selon l'une quelconque des revendications 1 à 8 dans lequel il y a des squelettes polymères de deux types différents A et B portant un agent de modification à chacune de leurs extrémités formant une association lineaire multiblocs, A/B.

11. Matériau selon l'une quelconque des revendications 1 à 8 dans lequel il y a des squelettes polymères de deux types différents A et B, chaque chaîne de A porte au moins deux agents de modification et B porte un agent de modification à l'une de ses extrémités ou un agent de modification à chacune de ses extrémités.

12. Objets tels que des tubes, des films, des plaques, des joncs, des bouteilles, des conteneurs fabriqués avec le matériau de l'une quelconque des revendications précédentes.

13. Utilisation du matériau de l'une quelconque des revendications précédentes comme modifiant choc ou régulateur de rhéologie.

14. Utilisation du matériau de l'une quelconque des revendications précédentes comme agent de compatibilisation dans une composition comprenant entre autres au moins deux polymères appartenant à des classes polymères différentes.
